# EUROPEAN PATENT APPLICATION

(11) **EP 2 518 905 A1**
(43) Date of publication of application: **31.10.2012**
(21) Application number: 11290208.5
(22) Date of filing: 28.04.2011
(51) Int. Cl.: H04B 5/00, H04B 17/00

(54) **Determining a reliability of a radio frequency link**

(71) Applicant: NXP B.V., 5656 AG Eindhoven (NL)
(72) Inventor: Perennes, Patrick, 5656 AG Eindhoven (NL); Grée, Maxime, 5656 AG Eindhoven (NL)
(74) Representative: Krott, Michel

(57) **Abstract**

A method of determining a reliability of a radio frequency link between a near field communication device and a reader device is provided. The method comprises providing, to a radio frequency level detector, an initial threshold value associated with an amplitude corresponding to a radio frequency field associated with the radio frequency link, detecting a radio frequency field, determining the amplitude corresponding to the detected radio frequency field, and determining a reliability of the radio frequency link based on the determined amplitude corresponding to the detected radio frequency field and the initial threshold value.

## Description

### FIELD OF THE INVENTION

The invention relates to method of determining a reliability of a radio frequency link between a near field communication device and a reader device.

Beyond this, the invention relates to a radio frequency level detector.

Moreover, the invention relates to a near field communication device. Furthermore, the invention relates to a computer-readable medium.

Beyond this, the invention relates to a program element.

### BACKGROUND OF THE INVENTION

In the field of near field communication (NFC), one important aspect is the communication between a near field communication device, for example a smart card, and a reader device. Such a communication is typically carried out by means of a radio frequency link via an air interface. For the communication, a protocol is used, which is based on a wireless interface. There are always two parties to the communication; hence the protocol is also known as peer-to-peer communication protocol. The protocol establishes wireless network connections between the near field communication device on the one hand and the reader device on the other hand. Depending on the devices, there exists different operating distances, typically in the range of 0 to 20 cm.

The NFC protocol distinguishes between the initiator and the target of the communication. The initiator is the device that initiates and controls the exchange of data. The target is the device that answers the request from the initiator. There exist two modes of operation: active mode and passive mode. In the active mode, both devices generate their own radio frequency field for communication. In the passive mode, only one device generates the radio frequency field while the other device uses load modulation to transfer the data. The protocol specifies that the initiator is the device responsible to generate the radio frequency field. The quality of the communication depends highly on the quality of the communication link.

### OBJECT AND SUMMARY OF THE INVENTION

It is an object of the invention to provide a method of providing information about the quality of the communication link before establishing a communication.

In order to achieve the object defined above, a method of determining a reliability of a radio frequency link between a near field communication device and a reader device, a radio frequency level detector, a near field communication device, a computer-readable medium and a program element according to the independent claims are provided.

According to an exemplary embodiment of the invention, a method of determining a reliability of a radio frequency link between a near field communication device and a reader device is provided. The method comprises providing, to a radio frequency level detector, an initial threshold value associated with an amplitude corresponding to a radio frequency field associated with the radio frequency link, detecting a radio frequency field, determining the amplitude corresponding to the detected radio frequency field, and determining a reliability of the radio frequency link based on the determined amplitude corresponding to the detected radio frequency field and the initial threshold value.

According to a further exemplary embodiment, a radio frequency level detector for determining a reliability of a radio frequency link between a near field communication device and a reader device is provided. The radio frequency level detector comprises a receiving unit for receiving an initial threshold value associated with an amplitude corresponding to a radio frequency field associated with the radio frequency link being provided to the radio frequency level detector, a detection unit for detecting a radio frequency field, a determination unit for determining the amplitude corresponding to the detected radio frequency field and for determining a reliability of the radio frequency link based on the determined amplitude corresponding to the detected radio frequency field and the initial threshold value.

According to a further exemplary embodiment, a near field communication device is provided. The near field communication device comprises a radio frequency level detector having the above mentioned features.

According to a further exemplary embodiment, a computer-readable medium is provided, in which a computer program of determining a reliability of a radio frequency link between a near field communication device and a reader device is stored, which computer program, when being executed by a processor, is adapted to carry out or control a method having the above mentioned features.

According to still another exemplary embodiment, a program element (for instance a software routine, in source code or in executable code) of determining a reliability of a radio frequency link between a near field communication device and a reader device is provided, which program element, when being executed by a processor, is adapted to carry out or control a method having the above mentioned features.

Determining a reliability of a radio frequency link between a near field communication device and a reader device, which may be performed according to embodiments of the invention, can be realized by a computer program that is by software, or by using one or more special electronic optimization circuits, that is in hardware, or in hybrid form, that is by means of software components and hardware components.

The term "radio frequency link" may denote any kind of communication between a near field communication device, like for instance a smart card, and a reader device, which is based on radio frequency transmission. The near field communication device may be for example a smart card or RFID tag.

The term "reliability" may be defined by a value, for example percentages. It may also be defined or presented by binary values or by using "true" and "false", for example by using flags.

The term "radio frequency level detector" may denote a unit within the near field communication device being able to provide the required functionalities. The radio frequency level detector may be adapted to detect and to measure a radio frequency field in the environment of the near field communication device. Such a radio frequency field may be measured by measuring an amplitude (value) corresponding to the radio frequency field.

The reliability may be defined based on the measured or determined amplitude and an initial threshold value. This may be carried out for example by comparison of the both values.

In the following, further exemplary embodiments of the method will be explained. However, these embodiments also apply to the radio frequency level detector, to the program element and to the computer-readable medium.

The method may further comprise sending a notification signal to a control unit of the near field communication device, wherein the notification signal comprises information about the reliability of the radio frequency link.

The notification signal may comprise binary values or the values "true" or "false" for indicating the reliability of the communication link. In another embodiment, the notification signal may comprise a flag, indicating the reliability. Also percentages might be used to indicate whether a communication link is reliable or not.

The radio frequency level detector may comprise a receiving unit, a detection unit and a determination unit. All three units may be single units or may be integrated into one unit. It is also possible that some of these units are part of the control unit of the near field communication device. The control unit may be for example the CPU of the near field communication device.

Determining the amplitude corresponding to the radio frequency field may comprise determining a value of a peak-to-peak voltage corresponding to the radio frequency field. Based on the peak-to-peak voltage, the amplitude value of the radio frequency field may be calculated.

Determining the reliability of the radio frequency link may comprise comparing the determined value of the peak-to-peak voltage corresponding to the radio frequency field with the initial threshold value.

The radio frequency level detector may be initialized with the initial threshold value. As soon as a radio frequency (RF) field is seen or detected, the radio frequency level detector may start to determine the RF amplitude. Therefore, the radio frequency level detector may detect the peak-to-peak voltage of the RF field and compare it with the initial threshold value. If the peak-to-peak voltage is higher than the initial threshold value, the communication link may be determined as being acceptable for further communication. The incoming signal (RF field) may be compared to a reference defined by a pre-selected level. Each signal (the incoming signal and the signal comprising the pre-selected level) is integrated with some capacitance. The two resulting voltages may be compared and the output, defined as radio frequency level detector, goes high if the incoming signal is below the pre-selected reference value.

In another exemplary embodiment, if an RF field is seen, the radio frequency level detector will try to know the current range of RF peak-to-peak voltage. To determine it, the RF level detector will be initialized from a top value to a minimum value. There may be for example 8 pre-selected threshold values for the RF level detector.

Determining the reliability of the radio frequency link may further comprise comparing the determined value of the peak-to-peak voltage corresponding to the radio frequency field with a plurality of stored threshold values being associated with voltage values. In one further embodiment, the initial threshold value may be part of a plurality of predetermined values being stored for example in a lookup table. By comparing the current detected peak-to-peak voltage with predetermined (stored) values, a graded reliability may be determined. Multiple consecutive comparisons may be carried out using different threshold to extract information about the field itself. These comparisons may be performed in the radio frequency level detector. The radio frequency level detector may use a default threshold which is configurable. When an external RF field is present, the detector compares it to the pre-defined threshold and flags if the field is higher or not. By using a plurality of pre-selected threshold values, better information about the volume of the RF field may be obtained. A control unit of the NFC device may drive the radio frequency level detector to do successive comparisons to the pre-defined stored values, for example 8 values. Consequently, the control unit may be able to quantify more accurately the level of the RF field.

In operation, the incoming signal (RF field) may be compared to a reference defined by one of the, for example 8 or more, pre-selected levels. Each signal may be integrated with some capacitance. The two resulting voltages are compared and the output goes high if the incoming signal is below the pre-selected reference value. This means that it may be determined whether the communication link is reliable or not, as the level of the RF field depends on the range between NFC device and reader device.

The radio frequency link may be defined as being reliable for communication between the reader device and the near field communication device, when the determined value of the peak-to-peak voltage is higher than the initial threshold value.

In this case, the communication link may be determined as being reliable, and therefore, a communication between the near field communication device and the reader device may be established.

The method may further comprise repeating after a predetermined time period the determining of the amplitude corresponding to the detected radio frequency field and the determining of a reliability of the radio frequency link based on the determined amplitude corresponding to the detected radio frequency field and the initial threshold value, when the radio frequency link is determined to be reliable.

After establishing a communication, the radio frequency level detector may monitor the radio frequency field to detect, whether the reader device is moving away and therefore the communication link will get weaker. If this is the case, the control unit of the near field communication device may receive a notification signal from the radio frequency level detector that the communication link is not reliable anymore.

The radio frequency link may be defined as being not reliable for communication between the reader device and the near field communication device, when the determined value of the peak-to-peak voltage is lower than the initial threshold value.

This may be the case before a communication has been established. It may also occur during a communication, when the communication link or rather the radio frequency field is getting weaker, for example based on a greater distance between the near field communication device and the reader device.

The aspects defined above and further aspects of the invention are apparent from the examples of embodiment to be described hereinafter and are explained with reference to these examples of embodiment.

### BRIEF DESCRIPTION OF THE DRAWINGS

The invention will be described in more detail hereinafter with reference to examples of embodiment but to which the invention is not limited.
Fig. 1 illustrates a flow chart diagram showing a method of determining a reliability of a radio frequency link according to an exemplary embodiment of the invention.
Fig. 2 illustrates a flow chart diagram showing a method of determining a reliability of a radio frequency link according to a further exemplary embodiment of the invention.
Fig. 3 illustrates a near field communication device comprising a radio frequency level detector according to an exemplary embodiment of the invention.
Fig. 4 illustrates a communication system comprising the device of Fig. 3 in combination with a reading device according to an exemplary embodiment of the invention.

### DESCRIPTION OF EMBODIMENTS

The illustration in the drawing is schematically. In different drawings, similar or identical elements are provided with the same reference signs.

In passive communication mode of a near field communication (NFC) device, the reliability of the NFC communication depends on the distance between the reader device and the NFC device, for example a card. If they are too far, the RF volume seen by the target (card) will be too weak.

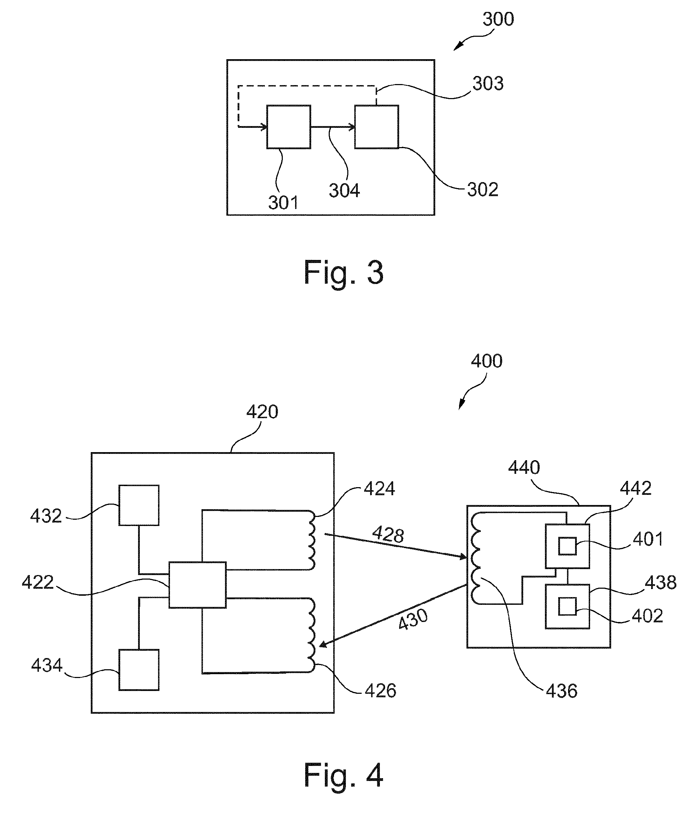

Fig. 3 illustrates a near field communication device 300 according to an exemplary embodiment of the invention. A radio frequency (RF) level detector 301 may be used in card modes. This detector is initialized with a default threshold (arrow 303). The threshold may be provided from a control unit 302 of the NFC device to the detector or may be provided from any memory unit or from an external source. It may be for example configurable between 100mV to 1.2V. When a RF field with a peak-to-peak voltage higher than the pre-defined threshold appears, the detector notifies (arrow 304) the control unit 302 of the near field communication device that an RF Field is present. Also a warning message could be displayed on a user interface of the NFC device to notify that the antenna of the NFC device is too far from the reader antenna. The determination of the peak-to-peak voltage might also be used internally to adapt the card load modulation amplitude.

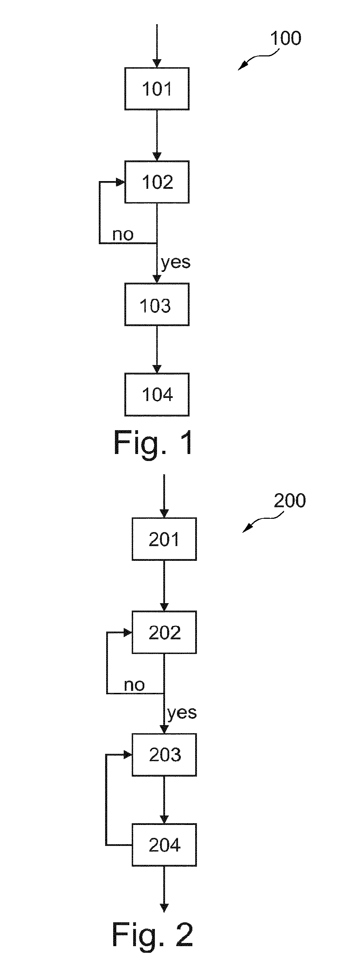

Fig. 1 illustrates a flow chart diagram describing the method 100 of determining a reliability of a radio frequency link according to an exemplary embodiment of the invention in more detail. In this Fig., the range of the peak-to-peak voltage at the beginning of the RF communication is illustrated.

When the NFC device is initialized in card mode, the RF level detector is initialized with a minimum value, the initial threshold value (101). The RF level detector detects whether there is an RF field present or not (102). If an RF field is seen, the detector will try to know the current range of RF peak-to-peak voltage (103). To determine it, the RF level detector will be initialized from a top value to a minimum value. There may be for example 8 pre-selected threshold values for the RF level detector. These threshold values may be stored in a memory unit of the NFC device. The RF level detector goes through each value starting from 7 to 0. 7 means the maximum level is set and once peak-to-peak voltage is below that value, the RF level detection bit triggers.

One example for pre-selected threshold values is shown in the following:

| **Settings<2:0>** | **peak-to-peak voltage (V)** |
|---|---|
| 111 | 1.2 |
| 110 | 0.84 |
| 101 | 0.594 |
| 100 | 0.414 |
| 011 | 0.294 |
| 010 | 0.21 |
| 001 | 0.144 |
| 000 | 0.102 |

As soon as the external RF field is higher than the current threshold, the RF level detector will notify it (104). Subsequently, a notification signal may be send to the control unit of the NFC device. Once this threshold is known, this value is readable in the control unit and the RF level detector may be re-initialized with a default value (minimum value) to know if the target is removed from the external RF field.

**Fig. 2** illustrates a flow chart diagram describing the method 200 of determining a reliability of a radio frequency link according to a further exemplary embodiment of the invention. In this Fig., monitoring the range of the peak-to-peak voltage during the RF communication is illustrated.

When the NFC device is initialized in card mode, the RF level detector is initialized with a minimum value (201). If an RF field is seen, the NFC device will try to know the current range of the RF peak-to-peak voltage. To determine it, the RF level detector will be initialized from the top value to the minimum value (202). The RF level detector goes through ("no") every pre-defined setting (see table above) until this signal goes up ("yes"). As soon as the external RF field is lower than the pre-defined threshold, a signal status (output of the RF level detector) is sent to the control unit (203). That signal goes high as soon as the pre-defined peak-to-peak value (corresponding to setting [2:0]) is lower than the signal arriving on the RF level detector (203). Once this threshold is known, this value is readable in the control unit. The current threshold value will be kept and each XXXms, this value will be re-evaluated with steps 202 and 203. If the RF level detector notifies that the RF seen is different than the latest known threshold, the system updates the readable value (204). Then, the re-evaluation will be repeated.

Fig. 4 illustrates a communication system 400 comprising the device of Fig. 3 in combination with a reading device according to an exemplary embodiment of the invention. The communication system 400 comprises a reader device 420 and an NFC device 440.

The reader 420 comprises a processor 422 (such as a microprocessor or a central processing unit) which is communicatively coupled with an emitter antenna 424 and a receiver antenna 426. The emitter antenna 424 is capable of transmitting a communication message 428 to the NFC device 440. The receiver antenna 426 is capable of receiving a communication message 430 from the NFC device 440. Although the transmission antenna 424 and the receiver antenna 426 are illustrated as two different antennas in Fig. 4, alternative embodiments may also use a single common shared transceiver antenna.

The antennas 424, 426 are electrically coupled with the processor 422 so that data may be sent from the processor 422 to the transmission antenna 424 for transmission as a communication message 428. A communication message 430 received by the receiver antenna 426 may also be analyzed and processed by the processor 422.

A storage unit 432 such as a semiconductor memory is coupled with the processor 422 so as to allow storing data accessible for the processor 422. Furthermore, an input/output unit 434 is shown which allows a user to operate the reader device 420. The input/output unit 434 may comprise input elements such as buttons, a keypad, a joystick or the like. Via such input elements, a user may input commands to the reader device 420. Furthermore, the input/output unit 434 may comprise a display unit such as a liquid crystal display allowing displaying results of the reading procedure of the reader device 420 visible for a user.

As can be further taken from Fig. 4, the NFC device 440 comprises a transmission and receiver antenna 436, a processor 442 such as a microprocessor and a radio frequency level detector 438. In an embodiment, the radio frequency level detector 438 and the processor or control unit 442 may be monolithically integrated in an integrated circuit (IC) which can be connected to the antenna 436 and attached to a support such as a piece of fabric.

After an established communication, i.e. after carrying out the method as explained together with Fig. 1, the communication messages 428, 330 can be exchanged in a wireless manner between the entities 420, 440.

The control unit 401 may correspond to the control unit 302 of Fig. 3, and may comprise also the receiving unit for receiving the initial threshold value. The same applies to the radio frequency level detector 301 of Fig. 3, which may correspond to the radio frequency level detector 402. The control unit, the receiving unit and the radio frequency level detector may also be integrated in one single unit.

It should be noted that the term "comprising" does not exclude other elements or features and the "a" or "an" does not exclude a plurality. Also elements described in association with different embodiments may be combined.

It should also be noted that reference signs in the claims shall not be construed as limiting the scope of the claims.

## Claims

1. A method of determining a reliability of a radio frequency link between a near field communication device and a reader device, the method comprising
providing, to a radio frequency level detector, an initial threshold value associated with an amplitude corresponding to a radio frequency field associated with the radio frequency link,
detecting a radio frequency field,
determining the amplitude corresponding to the detected radio frequency field, determining a reliability of the radio frequency link based on the determined amplitude corresponding to the detected radio frequency field and the initial threshold value.

2. The method according to claim 1, further comprising
sending a notification signal to a control unit of the near field communication device, wherein the notification signal comprises information about the reliability of the radio frequency link.

3. The method according to claim 1, wherein
determining the amplitude corresponding to the radio frequency field comprises determining a value of a peak-to-peak voltage corresponding to the radio frequency field.

4. The method according to claim 3, wherein
determining the reliability of the radio frequency link comprises comparing the determined value of the peak-to-peak voltage corresponding to the radio frequency field with the initial threshold value.

5. The method according to claim 4, wherein
determining the reliability of the radio frequency link further comprises comparing the determined value of the peak-to-peak voltage corresponding to the radio frequency field with a plurality of stored threshold values being associated with voltage values.

6. The method according to claim 4, wherein
the radio frequency link is defined as being reliable for communication between the reader device and the near field communication device, when the determined value of the peak-to-peak voltage is higher than the initial threshold value.

7. The method according to claim 6, further comprising
repeating after a predetermined time period the determining of the amplitude corresponding to the detected radio frequency field and the determining of a reliability of the radio frequency link based on the determined amplitude corresponding to the detected radio frequency field and the initial threshold value, when the radio frequency link is determined to be reliable.

8. The method according to claim 4, wherein
the radio frequency link is defined as being not reliable for communication between the reader device and the near field communication device, when the determined value of the peak-to-peak voltage is lower than the initial threshold value.

9. A radio frequency level detector for determining a reliability of a radio frequency link between a near field communication device and a reader device, the radio frequency level detector comprising
a receiving unit for receiving an initial threshold value associated with an amplitude corresponding to a radio frequency field associated with the radio frequency link being provided to the radio frequency level detector,
a detection unit for detecting a radio frequency field,
a determination unit for determining the amplitude corresponding to the detected radio frequency field and for determining a reliability of the radio frequency link based on the determined amplitude corresponding to the detected radio frequency field and the initial threshold value.

10. A near field communication device comprising a radio frequency level detector according to claim 9.

11. A computer-readable medium, in which a computer program of determining a reliability of a radio frequency link between a near field communication device and a reader device is stored, which computer program, when being executed by a processor, is adapted to carry out or control a method according to claim 1.

12. A program element of determining a reliability of a radio frequency link between a near field communication device and a reader device, which program element, when being executed by a processor, is adapted to carry out or control a method according to claim 1.
